# EUROPÄISCHE PATENTSCHRIFT

(11) **EP 3 534 110 B1**
(45) Veröffentlichungstag und Bekanntmachung des Hinweises auf die Patenterteilung: **27.01.2021**
(21) Anmeldenummer: 18214154.9
(22) Anmeldetag: 19.12.2018
(51) Int. Cl.: G01C 11/04, G01C 15/00, G01C 21/32, G06T 17/05

(54) **VERFAHREN UND VORRICHTUNG ZUM ERGÄNZEN EINER ELEKTRONISCH NUTZBAREN REPRÄSENTATION EINER UMGEBUNG**
METHOD AND DEVICE FOR SUPPLEMENTING AN ELECTRONICALLY USABLE REPRESENTATION OF AN ENVIRONMENT
PROCÉDÉ ET DISPOSITIF PERMETTANT DE COMPLÉTER UNE REPRÉSENTATION UTILE ÉLECTRONIQUEMENT D'UN ENVIRONNEMENT

(30) Priorität: 02.03.2018 DE 102018104781
(43) Veröffentlichungstag der Anmeldung: 04.09.2019
(73) Patentinhaber: SICK AG, 79183 Waldkirch (DE)
(72) Erfinder: HANSEN, Christoph, 20535 Hamburg (DE); RÖWEKÄMPER, Jörg, 79211 Denzlingen (DE); HIMSTEDT, Marian, 23558 Lübeck (DE)
(74) Vertreter: Manitz Finsterwald Patent- und Rechtsanwaltspartnerschaft mbB

(56) Entgegenhaltungen:
- DE-A1-102012 103 373

## Beschreibung

Die Erfindung betrifft ein Verfahren und eine Vorrichtung zum Ergänzen einer elektronisch nutzbaren Repräsentation einer Umgebung sowie einen Datenträger mit einer Software zur Implementierung des entsprechenden Verfahrens.

Elektronisch nutzbare Umgebungsrepräsentationen können als elektronisch lesbare Karten verstanden werden. Sie können von autonom navigierenden Fahrzeugen genutzt werden. Dies ist in der Regel eine zweidimensionale Repräsentation, in welcher eine Ebene/Fläche mit Merkmalen im Sinne von Bewegungshindernissen belegt wird, wobei die Merkmale real erfassten Bewegungshindernissen entsprechen. In der Robotik sowie auch für die Navigation von Drohnen sind ebenfalls dreidimensionale Anwendungen möglich, in denen die Umgebung dreidimensional repräsentiert ist.

Umgebungsrepräsentationen werden durch elektronische Vermessung der Umgebung geschaffen. Die elektronische Vermessung der Umgebung kann das Scannen der Umgebung aus vielerlei Positionen/Perspektiven heraus umfassen. Jeder Scan aus jeder Position ergibt in der Regel eine Vielzahl von Datenpaaren aus Richtung und Abstand zu einem Hindernis. Diese Datenpaare können dazu verwendet werden, eine Umgebungsrepräsentation aufzubauen, die Bewegungshindernisse und gegebenenfalls Metadaten dazu aufweist. Die Speicherung kann nach Art einer Gridmap (entsprechend einer graphischen Bitmap) erfolgen oder in anderen Datenformaten, etwa als Vektorgrafik. Gridmaps können eine gekachelte Fläche umfassen, auf der die Kachelgröße die kleinste Einheit ist und der möglichen Ortsauflösung entspricht. Zu jeder Kachel können Angaben gespeichert werden, die die Umgebung an der Stelle der Kachel repräsentieren. So können insbesondere Einträge zu Hindernissen hinterlegt sein. Hindernisse und allgemein kartierte Objekte werden nachfolgend auch als "Merkmale" bezeichnet.

Eine initiale Umgebungsrepräsentation kann durch eine oder mehrere Messfahrten eines entsprechend ausgestatteten Fahrzeugs erzeugt werden. Die Messfahrt ist so geplant, dass möglichst alle Merkmale (Bewegungshindernisse) von Interesse erfasst werden können, so dass sie auch in die Repräsentation eingetragen werden können. Bei solchen Messfahrten können alle Objekte von Relevanz mindestens teilweise oder vollständig erfasst werden und können deshalb auch teilweise oder vollständig in die Umgebungsrepräsentation eingetragen werden.

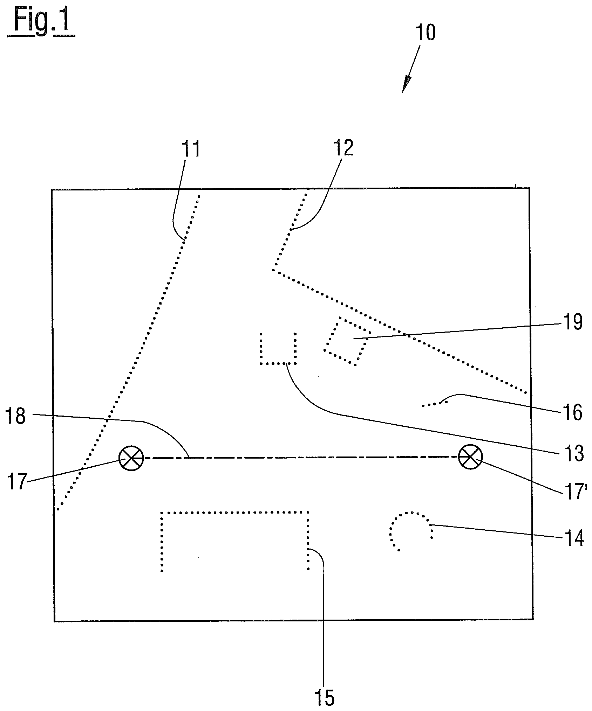

Die Situation in Umgebungen ändert sich aber im Laufe der Zeit, etwa weil Gegenstände abgestellt, entfernt oder umrangiert wurden. Fig. 1 zeigt schematisch ein Abbild einer möglichen Umgebungsrepräsentation 10. Die Repräsentation ist umgrenzt durch logisch bekannte Grenzen 19. Innerhalb der dargestellten Umgebung sind Merkmale aufgeführt, die als Bewegungshindernis verstanden werden können. Angenommen sei, dass bei der Initialisierung bzw. anfänglichen Erfassung der Umgebung Wände 11 und 12 vollständig erfasst wurden und als eine räumliche Folge von belegten Zellen/Kacheln bekanntgeworden sind und als solche Eingang in die Umgebungsrepräsentation fanden. Mit 11 ist links eine gerade Wand symbolisiert, mit 12 rechts oben eine abknickende Wand.

Es sei hier darauf hingewiesen, dass die Darstellung der Fig. 1 der Umgebungsrepräsentation 10 nicht sagen will, dass das Datenformat, wie es gespeichert wird, der Darstellung entspricht. Das Speicherformat kann völlig anders sein, etwa in Form einer vektoriellen Darstellung der einzelnen Merkmalsbereiche. Fig. 1 suggeriert dagegen die Darstellung nach Art einer Gridmap, was im Weiteren der Anschaulichkeit halber auch zur Erläuterung der Erfindung verwendet wird.

Nach der initialen Vermessung der Umgebung können sich Änderungen ergeben, die auch fortwährend erfasst und in die Umgebungsrepräsentation eingetragen werden. Die fortwährende Erfassung kann z. B. durch autonom navigierende Fahrzeuge erfolgen. Mit 17 ist eines von ihnen symbolisiert. Es wird angenommen, dass es sich längs eines Pfades 18 zur Position 17' bewegt. Während dieser Bewegung kann es die Umgebung fortlaufend vermessen, etwa mittels LIDAR (Light Detection and Ranging) oder mittels LADAR (Laser Detection and Ranging) oder Radar oder einer 3D-Kamera (Stereokamera) oder einer bewegter Monokamera, die vorzugsweise um das Fahrzeug vollständig herum die Umgebung nach Hindernissen abtasten und diese jeweils nach Richtung und Abstand erfassen.

Entsprechend der gewünschten bzw. eingestellten Winkelauflösung (beispielsweise 1°, 0,5°) können sich pro Vermessung eine Vielzahl von Wertepaaren aus Richtung und Abstand ergeben, und solche Vermessungen können wiederholt durchgeführt werden, so dass große Datenmengen zur Vermessung der Umgebung zur Verfügung stehen.

Gleichwohl können systematische Grenzen nicht überwunden werden. Wenn sich das Fahrzeug 17 längs des Pfades 18 nach 17' bewegt, kann es sichtbare Seiten neuer Objekte 13, 14 und 15 erfassen, nach bekannten Algorithmen Mustererkennungen vornehmen und dann auch Einträge in der Umgebungsrepräsentation 10 vornehmen. Beispielsweise wird angenommen, dass jüngst eine Palette 13 sowie ein kleiner Container 15 und ein runder Gegenstand 14 abgestellt wurden. Wenn das Fahrzeug 17 sich an ihnen vorbeibewegt und diese einmal oder auch mehrmals oder auch oft erfasst, können die sichtbaren Seiten der Gegenstände gut erfasst und dann auch kartiert bzw. in die Repräsentation eingetragen werden. Aber die unsichtbaren bzw. abgewandten Seiten können nicht erfasst werden, weil sie nicht sichtbar sind, und entziehen sich deshalb auch der unmittelbaren Repräsentation in der Umgebung.

Erst wenn ein Fahrzeug aus anderen Perspektiven (etwa in Fig. 1 unten von links nach rechts längs der unteren Grenze der repräsentierten Umgebung fahrend) auch die anderen Seiten der Objekte 14 und 15 vermessen kann, erscheinen diese in der Umgebungsrepräsentation. Bis dahin erscheinen sie aber nicht, und die Karte ist insoweit unvollständig.

Die DE 102012103373 A1 beschreibt ein Verfahren zur Komplettierung eines 3D-Modells einer urbanen Szene. Zum Stand der Technik weiter bekannt sind US 2014/0125651 A1, US 2008/0215235 A1 und DE 102013113096 A1.

Aufgabe der Erfindung ist es, ein Verfahren und eine Vorrichtung zum Ergänzen einer elektronisch nutzbaren Repräsentation einer Umgebung anzugeben, die es ermöglichen, Objekte möglichst zeitnah ergänzt oder vollständig in eine Umgebungsrepräsentation aufzunehmen. Auch diesbezügliche Datenträger mit Software darauf sollen geschaffen werden.

Diese Aufgabe wird mit den Merkmalen der unabhängigen Ansprüche gelöst. Abhängige Patentansprüche sind auf bevorzugte Ausführungsformen der Erfindung gerichtet.

Kurz gesagt werden gemäß der Erfindung unvollständige Objektrepräsentationen gesucht und diese nach Maßgabe passender, schon anderweitig bekannt gewordener Objektrepräsentationen ergänzt oder dadurch ersetzt.

Die unabhängigen Patentansprüche 1 und 2 definieren Verfahren zum Ergänzen einer elektronisch nutzbaren Repräsentation einer Umgebung. Sie umfassen die Schritte
- Bereitstellen einer elektronisch nutzbaren Umgebungsrepräsentation, insbesondere mit Objektrepräsentationen darin, und ggf. einer elektronisch nutzbaren Liste bekannter Objekte, wobei die Liste zu jedem Objekt Informationen hält, die einen repräsentativen Eintrag von das Objekt repräsentierenden Daten in der Umgebungsrepräsentation ermöglichen,
- Vermessen einer Umgebung und Extrahieren einer unvollständigen Objektrepräsentation aus dem Vermessungsergebnissen, und/oder Überprüfen von Einträgen in der Umgebungsrepräsentation und Extrahieren einer unvollständigen Objektrepräsentation aus der Umgebungsrepräsentation,
- Prüfen, ob die unvollständige Objektrepräsentation als ein Bereich eines in der Liste oder andernorts in der Umgebungsrepräsentation schon enthaltenen bekannten vollständigen oder unvollständigen Objekts hinreichend wahrscheinlich qualifiziert, und wenn ja, Eintragen von Daten in die Umgebungsrepräsentation nach Maßgabe der Daten des schon enthaltenen Objekts.

Die Erfindung macht sich also zunutze, dass bereits ganz oder teilweise bekannte Objekte (oder die später erwähnten semantischen Informationen) verwendet werden, um bereits existierende geometrische Karten zu erweitern oder zu vervollständigen. Hierdurch kann auf schnelle und damit zeitnahe Weise eine ergänzte oder vollständige Umgebungsrepräsentation geschaffen werden.

Anders ausgedrückt umfasst das Verfahren:
- Prüfen, ob die unvollständige Objektrepräsentation einem Bereich einer andernorts in der Umgebungsrepräsentation vorhandenen ersten Objektrepräsentation eines ersten Objekts hinreichend ähnelt, und/oder
- wenn ja, einerseits Eintragen von Objektrepräsentationsdaten in die Umgebungsrepräsentation an der Stelle der unvollständigen Objektrepräsentation nach Maßgabe der Daten der ersten Objektrepräsentation in der Umgebungsrepräsentation, und/oder andererseits Eintragen von das in der Liste enthaltene Objekt beschreibenden Objektrepräsentationsdaten in die Umgebungsrepräsentation an der Stelle der unvollständigen Objektrepräsentation nach Maßgabe der Objektinformationen in der Liste.

Bevorzugt umfasst das Vermessen der Umgebung die Schritte
b1. Erkennen einer Teilansicht eines Objekts in dem oder den Vermessungsergebnissen oder in der Umgebungsrepräsentation,
b2. Überprüfen in der vorliegenden Umgebungsrepräsentation, ob die erkannte Teilansicht Teil einer in der Umgebungsrepräsentation eingetragenen bekanten vollständigen oder teilweisen Objektrepräsentation ist, und
b3. wenn nicht, Extrahieren der erkannten Teilansicht als unvollständige Objektrepräsentation.

Eine unvollständige Objektrepräsentation wird folglich nicht verworfen, sondern bis zur weiteren Vervollständigung gespeichert.

Insbesondere werden im obigen Schritt b2 Daten aus den Vermessungsergebnissen oder der Umgebungsrepräsentation auf hinreichende Unterscheidungskraft überprüft und nur beim Vorliegen derselben als Teilansicht eines Objektes gewertet. Die Unterscheidungskraft kann beispielsweise durch eine Bewertung der in dem Objekt enthaltenen Winkel, Radien und/oder Längen ermittelt werden.

Bevorzugt erfolgt im Schritt a. eine Aktualisierung der Umgebungsrepräsentation durch Eintrag eines Merkmals in der Umgebungsrepräsentation. Nach der Aktualisierung wird bevorzugt die Überprüfung von Einträgen in der Umgebungsrepräsentation des Schritts b. ausgeführt, indem das neue Merkmal und in der Nähe liegende repräsentierte Merkmale daraufhin überprüft werden, ob sie eine unvollständige Objektrepräsentation sind.

Weiter bevorzugt umfasst der Listeneintrag für ein Objekt eine Gridmap und/oder eine vektorielle Darstellung des Objekts.

Vorteilhafterweise werden im Schritt c. nach Maßgabe des Prüfungsergebnisses Metaangaben erzeugt, welche z.B. nach Maßgabe des Prüfungsergebnisses oder nach Maßgabe der Metaangaben selbst in die Umgebungsrepräsentation eingetragen werden. Bei den Metaangaben kann es sich beispielsweise um einen Zuverlässigkeitswert handeln, welcher z.B. ortsaufgelöst angibt, wie zuverlässig vorhanden oder erfassbar ein jeweiliges Merkmal in der Umgebungsrepräsentation ist.

Bevorzugt enthält die Liste Metaangaben zu gelisteten bekannten/vollständigen Objekten, wobei nach Maßgabe der Liste Metaangaben in die Umgebungsrepräsentation eingetragen werden können. Es kann folglich anhand der Liste mit den gelisteten Objekten entschieden werden, ob die Metaangaben in die Umgebungsrepräsentation übernommen werden.

Weiter bevorzugt enthält die Liste verarbeitete Daten zu gelisteten Objekten, die bei der Objekterkennung herangezogen werden. Insbesondere können ausschließlich die in der Liste enthaltenen Daten zur Vervollständigung von Objekten verwendet werden.

Das Verfahren kann sich auch dadurch auszeichnen, dass
a. der Listeneintrag eines Objekts eine orientierte Objektbeschreibung aufweist,
b. der extrahierten Teilansicht eine Orientierung zugeordnet wird und
c. der Eintrag von Objektdaten in der Umgebungsrepräsentation nach Maßgabe der zugeordneten Orientierung erfolgt.

Die jeweilige Orientierung kann beispielsweise nach einer Himmelsrichtung (z.B. Norden) oder nach der Richtung der größten Erstreckung des Objekts erfolgen.

Bevorzugt beschreiben die Objekteinträge in der Liste ein Objekt dreidimensional. Das Verfahren kann daher auch Objekte unterscheiden, welche zwar den gleichen Grundriss aufweisen, sich aber sonst in Ihrer dreidimensionalen Struktur unterscheiden. Auch können Objekte dann erkannt werden, wenn sie nur zweidimensional betrachtet werden und z.B. gekippt sind oder aus einem anderen Blickwinkel betrachtet werden. Nichtsdestotrotz ist es also möglich, die Umgebung grundsätzlich zumindest zum Teil flächig (d.h. zweidimensional) zu vermessen.

Vorteilhafterweise wird die unvollständige Objektrepräsentation ergänzt oder durch eine bekannte, vorzugsweise vollständige Objektrepräsentation ersetzt. Die jeweilige Objektrepräsentation kann somit mit der Zeit verbessert werden, wodurch eine verbesserte Informationsgrundlage für die nachfolgende Verwendung der Umgebungsrepräsentation geschaffen wird.

Insbesondere kann die Umgebungsrepräsentation für die Lokalisierung und/oder Routenplanung z.B. eines selbstfahrenden Fahrzeugs herangezogen werden. Das selbstfahrende Fahrzeug kann einen optischen Scanner, z.B. einen Laserscanner, zur Erfassung seiner Umgebung und damit auch zur Objekterkennung aufweisen. Das hierin beschriebene Verfahren kann von dem Fahrzeug und insbesondere einem Rechner des Fahrzeugs durchgeführt werden. Auch können mehrere solcher Fahrzeuge gemeinsam das Verfahren durchführen und gemeinsam zur Verbesserung einer gemeinsamen Umgebungsrepräsentation beitragen.

Durch die verbesserte Umgebungsrepräsentation wird die Lokalisierung und Routenplanung auch anhand von vergleichsweise kleinen Datensätzen möglich. Insbesondere kann bei der Lokalisierung die Komplexität und der Aufwand eines initialen Mapping-Prozesses verringert werden. Auch bei der Routenplanung können durch die Vervollständigung von Objektrepräsentationen auch die momentan nicht sichtbaren (hinteren) Bereiche von Objekten bekannt sein, wodurch auch diese Bereiche für die Routenplanung verwendet werden können.

Mit der Herangehensweise des beschriebenen Verfahrens werden als unvollständig erkannte Objektrepräsentationen nach Maßgabe von Informationen aus womöglich vollständigen, jedenfalls schon bekannten Objektrepräsentationen vervollständig bzw. insgesamt die unvollständigen Repräsentationen durch die schon bekannten ersetzt. Die bekannten Objektrepräsentationen können vollständig oder ihrerseits unvollständig sein und können einer explizit erstellten Liste entnommen werden, oder sie können schon in der zu ergänzenden Umgebungsrepräsentation selbst vorhanden sein.

Auf diese Weise muss nicht eine eigene Messfahrt durchgeführt werden oder darauf gewartet werden, dass zufällig die fehlenden Teile beigesteuert werden. Vielmehr können sie nach Maßgabe von vorhandenen, extrahierten Informationen ergänzt und vervollständigt werden.

Angegeben werden auch eine Vorrichtung zur Durchführung des Verfahrens sowie ein Datenträger mit entsprechender Software darauf.

Nachfolgend werden Ausführungsformen der Erfindung Bezug nehmend auf die Zeichnungen beschrieben. Es zeigen
- Fig. 1: schematisch eine Umgebung bzw. deren Repräsentation,
- Fig. 2: eine Liste bekannter Objekte,
- Fig. 3: Übergänge von unvollständigen auf bekannte vollständige Objektrepräsentationen, und
- Fig. 4: schematisch den Ablauf eines Verfahrens.

In Fig. 1 wird angenommen, dass 13 eine jüngst abgestellte Palette symbolisiert, 14 einen größeren rundlichen Gegenstand und 15 einen kleinen Container. Bei einer sich aus dem regulären Betrieb ergebenden Fahrt des Fahrzeugs 17 längs des Wegs 18 nach 17' konnten die gepunktet eingezeichneten Bereiche der Gegenstände 13, 14 und 15 vermessen werden und können als solche auch kartiert werden. Es sei darauf hingewiesen, dass unvollständige Einträge wie mit 13, 14, 15 symbolisiert, nicht notwendigerweise aus zeitnah zueinander erfolgten Vermessungen entstehen. Sie können sich auch im Laufe der Zeit durch mehrere zeitlich stärker beabstandete Vermessungen aufbauen.

Gemäß einem Aspekt der Erfindung werden eine Suche nach und eine Erkennung von unvollständigen Objektrepräsentationen 13, 14, 15 innerhalb der Umgebungsrepräsentation vorgenommen. Die Suche und Erkennung können aber auch in einem früheren Stadium erfolgen, nämlich anhand einer Vermessung bzw. in den dabei gewonnen Daten, oder anhand mehrerer kumulierter Vermessungen bzw. deren Ergebnisse, bevor sie Eingang in die Umgebungsrepräsentation finden. Nachfolgend wird jedoch die Erkennung unvollständiger Objektrepräsentationen anhand von Einträgen in der Umgebungsrepräsentation beschrieben. Jedoch soll damit deren Erkennung anhand von vorgelagerten Vermessungsergebnissen nicht a priori ausgeschlossen sein.

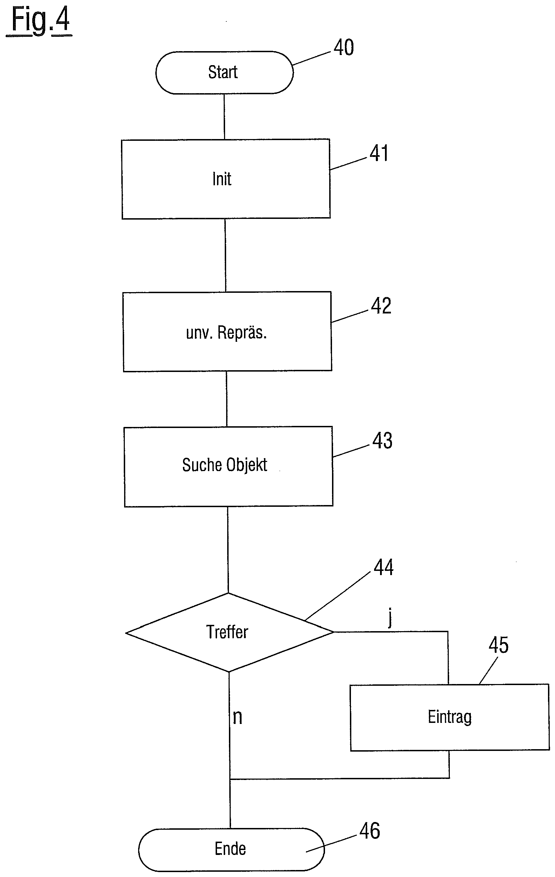

Allgemein gesprochen wird die Umgebungsrepräsentation 10 (oder - wie eben gesagt - vorgelagerte Messergebnisse) auf unvollständige Objektrepräsentationen hin überprüft. Dies entspricht dem Schritt 42 in Fig. 4. Wenn dabei unvollständige Objektrepräsentationen gefunden werden (beispielsweise 13 oder 14 oder 15 in Fig. 1), wird überprüft, ob die unvollständige Objektrepräsentation Teil einer andernorts vorhandenen, vorzugsweise vollständigen Objektrepräsentation sein kann. Hierbei sind zwei Möglichkeiten denkbar. Als "Quelle" bekannter Objektrepräsentationen kann die Umgebungsrepräsentation selbst dienen, oder es kann eine eigens dafür gepflegte Liste verwendet werden.

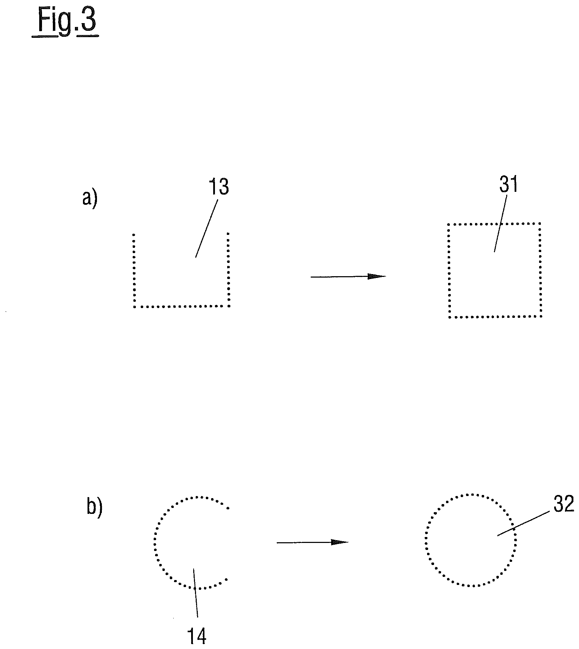

In Fig. 1 ist angenommen, dass bei Bezugsziffer 19 schon eine andere Palette erkannt und als solche vollständig in der Umgebungsrepräsentation 10 repräsentiert wurde. Mittels geeigneter Musterabgleichverfahren wird überprüft, ob das unvollständige Muster 13 einem der Muster in der Repräsentation 10 hinreichend ähnelt. Es sei angenommen, dass diese Überprüfung bei 19 und nur bei 19 zu einem hinreichend sicheren Ergebnis führt. Es entsteht auf diese Weise die Annahme, dass 13 unvollständig das repräsentiert, was vollständig schon bei 19 repräsentiert ist. Es kann dann die Objektrepräsentation 13 entsprechend der Objektrepräsentation 19 ergänzt oder ersetzt werden. Fig. 3a zeigt diesen Schritt im Übergang von 13 nach 31.

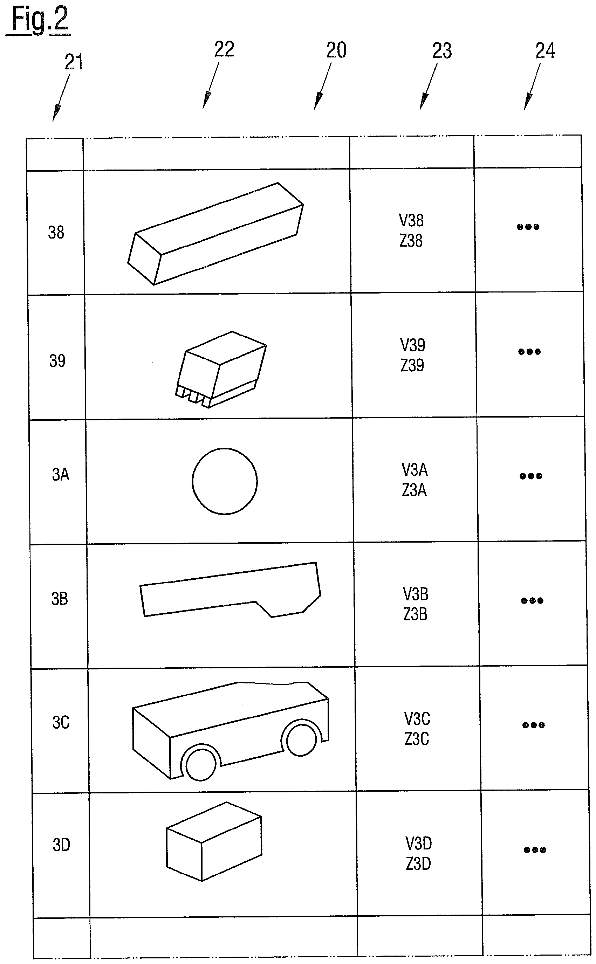

Eine andere Möglichkeit ist es, eine eigene Liste bekannter Objekte vorzuhalten und gegebenenfalls zu pflegen. Fig. 2 zeigt schematisch hierzu ein Beispiel der Liste 20. 21 sei lediglich ein Index zu Verwaltungszwecken, 22 ist eine schematische Darstellung der jeweils in einer Zeile repräsentierten Objekte. Die jeweiligen Repräsentationen sind vollständig. Die Graphik der Fig. 2 symbolisiert dabei nur was abstrakt in der jeweiligen Tabellenzeile als Objektbeschreibung niedergelegt ist. Die Objektbeschreibung kann abermals nach Art einer Gridmap/Bitmap erfolgen oder vektoriell. Darstellerische Unterschiede können dahingehend vorliegen, dass Objekte dreidimensional beschrieben sind (wie bei 38, 39, 3C, 3D) oder nur im Grundriss (wie bei 3A, 3B).

Grundsätzlich können unvollständige Objektrepräsentationen nach Maßgabe bekannter Objektrepräsentationen ergänzt oder durch letztere ersetzt werden. Die hierfür genützten bekannten Objektrepräsentationen (in einer Liste oder in der Umgebungsrepräsentation selbst) können vollständig oder ihrerseits unvollständig sein. Wenn sie unvollständig sind oder allgemein immer kann nach Maßgabe vorbestimmter Kriterien (etwa Größenvergleich, Vergleich von bestimmbaren Dimensionen, etwa gesamt längs oder quer oder hoch oder diagonal) geprüft werden, ob die bekannte Objektrepräsentation hinreichenden Überschuss gegenüber der unvollständigen Objektrepräsentation hat. Ein Ergänzen oder Ersetzen findet dann nur statt, wenn der Überschuss als hinreichend entschieden wurde.

Soweit nachfolgend die bekannten Objektrepräsentationen als vollständig beschrieben oder suggeriert sind, soll dies die Anwendung bzw. Verwendung von unvollständigen bekannten Objektrepräsentationen nicht ausschließen. Die Liste der Figur 2 etwa kann auch bekannte unvollständige Repräsentationen zu Such- und Vergleichszwecken halten.

In den gewählten Beispielen soll 38 die dreidimensionale Beschreibung eines langen Containers enthalten, 39 die dreidimensionale Beschreibung einer Palette, 3A den Grundriss einer Säule, 3B den Grundriss einer verschieblichen Maschine, 3C dreidimensional die Beschreibung eines Fahrzeugs, 3D die dreidimensionale Beschreibung eines Containers. Die Daten beschreiben die bekannten Objekte in ihrer absoluten Größe, so dass z. B. eine Palette von einem kleinen Container gut unterschieden werden kann.

Wenn in der repräsentierten Umgebung 10 eine unvollständige Objektrepräsentation 13, 14, 15 ermittelt wird, kann abermals mittels bekannter Musterabgleichalgorithmen versucht werden, in der Liste 20 der Fig. 2 "Treffer" zu finden. Es sei angenommen, dass zum Muster 13 ein Treffer in Zeile 39 gefunden wird, zu Muster 14 ein Treffer in Zeile 3A und zu Muster 15 ein Treffer in Zeile 3D. Nach Maßgabe der dem jeweiligen Treffer zugeordneten Daten können dann in der Umgebungsrepräsentation an der jeweiligen Stelle der jeweiligen unvollständigen Muster Ergänzungen vorgenommen werden.

Der Vorteil der Verwendung einer Liste 20 ist, dass sie eine Vielzahl von bekannten vollständigen Objekten konzentriert halten kann, so dass die Datenverarbeitung einfach und schnell erfolgen kann, weil nicht vollständige Umgebungsrepräsentationen nach passenden Mustern durchsucht werden müssen. Die Liste 20 kann zu jeder Zeile (zu jedem vollständigen Objekt) einen Eintrag 24 enthalten, der vorverarbeitete Daten enthält, die den Musterabgleich vereinfachen. Weiterhin kann die Liste eine Spalte 23 mit weiteren Einträgen zu jedem bekannten vollständigen Objekt enthalten, wobei die Einträge Metaangaben sind, die gegebenenfalls in die Umgebungsrepräsentation übernommen werden, siehe weiter unten. Die Liste 20 wird zusätzlich zur Umgebungsrepräsentation 10 gepflegt und gehandhabt.

Im Beispiel der Fig. 1 würde sich anhand der Liste ein Treffer nicht nur für die unvollständig repräsentierte Palette bei 13 ergeben, sondern auch ein Treffer für den runden Gegenstand 14, so dass auch dieser ergänzt werden kann, was in Fig. 3B im Übergang von 14 nach 32 symbolisiert ist. Auch die unvollständige Darstellung eines Containers 15 kann in gleicher Weise ergänzt werden.

Soweit unvollständige Objektrepräsentationen direkt aus Vermessungsergebnissen und nicht aus einer Umgebungsrepräsentation extrahiert werden, kann, bevor auf das Vorhandensein einer unvollständigen Objektrepräsentation geschlossen wird, in der Umgebungsrepräsentation überprüft werden, ob die in der Vermessung unvollständige Objektvermessung in der Umgebungsrepräsentation aufgrund früherer Eingaben schon vollständig repräsentiert ist. Ist dies der Fall, muss die unvollständige Vermessung nicht weiterverfolgt werden, da die vollständige Repräsentation schon früher bekannt geworden ist.

Als vollständige Objektrepräsentationen können in einer Ausführungsform Muster angesehen werden, die geschlossene Umrisse bilden (etwa 19 in Fig. 1) oder die von Rand zu Rand der Repräsentation reichen (11, 12 in Fig. 1). Allgemein können dann kleine zusammenhängende Bereiche von Merkmalen mit offenen Linienzügen als unvollständige Objektrepräsentation angesehen werden. 13, 14 und 15 sind Beispiele dafür. Ein weiteres Beispiel ist bei 16 in Fig. 1 gezeigt.

Bevor es aber als unvollständige Objektrepräsentation genommen wird, kann beurteilt werden, ob es für nachfolgende Erkennungsalgorithmen hinreichend unterscheidungskräftig ist. Wird angenommen, dass 16 nur eine sehr kleine Struktur repräsentiert, kann im Beispiel davon ausgegangen werden, dass dies als nicht hinreichend unterscheidungskräftig angesehen wird, so dass die Struktur bei 16 in der Umgebungsrepräsentation (ähnlich wäre es bei einer vergleichbaren Struktur in den Vermessungsergebnissen) nicht als Teilansicht eines Objekts oder unvollständige Objektrepräsentation verwendet wird.

Als Kriterium für hinreichende Unterscheidungskraft kann beispielsweise eine Mindestzahl von Winkeln (1 oder 2 oder mehrere) verwendet werden und/oder eine Mindestanzahl von von Winkeln begrenzten Strecken (1, 2 oder mehrere) und/oder eine Mindestgröße. Es können jeweils vorgegebene Toleranzbereiche für die Größe der Winkel oder die Länge der Strecken hinterlegt sein.

Allgemein gesprochen kann eine unvollständige Objektrepräsentation, für die eine passende vollständige Objektrepräsentation entweder in der vorliegenden Umgebungsrepräsentation oder in einer entsprechenden Liste gefunden wurde, ergänzt werden oder durch eine komplette vollständige Objektrepräsentation ersetzt werden. Dieses Ergänzen bzw. Ersetzen geschieht am Ort der unvollständigen Objektrepräsentation.

Sowohl die unvollständige Objektrepräsentation wie auch die womöglich gefundene vollständige Objektrepräsentation können eine Ausrichtung haben. In Fig. 2 ist der Grundriss bei 3B ein Beispiel dafür. Das Suchen von passenden bekanten bzw. vollständigen Objektrepräsentationen zu gefundenen unvollständigen Objektrepräsentationen kann auch nach Maßgabe einer Orientierung erfolgen, die in der ermittelten unvollständigen Objektrepräsentation bestimmt werden konnte. Auch die Ergänzung der unvollständigen Repräsentation oder deren Ersatz kann nach Maßgabe der Orientierung erfolgen.

Sowohl die Liste 20 der Fig. 2 als auch die schon existierende Umgebungsrepräsentation 10 können zu Merkmalen/Kacheln/Einträgen Metaangaben aufweisen.

Diese Metaangaben können eine oder mehrere der folgenden Angaben aufweisen:
- Eine Angabe zur Belegwahrscheinlichkeit einer Kachel der Umgebungsrepräsentation. Unter "Kachel" wird hierbei ein kleiner räumlicher Bereich der Umgebungsrepräsentation verstanden, der beispielsweise der bestmöglichen räumlichen Auflösung der Karte entsprechen kann, oder entsprechend zusammengesetzter Gebiete. Abermals wird darauf verwiesen, dass diese Bezeichnung lediglich der Veranschaulichung dient und nicht notwendigerweise das Speicherformat und Handhabungsformat der Umgebungsrepräsentation benennt. Mit dem Speichern einer Belegwahrscheinlichkeit wird dem Umstand Rechnung getragen, dass kartierte Merkmale nicht notwendigerweise fest in einer Umgebung vorhanden sind. Die Belegungswahrscheinlichkeit gibt also an, mit welcher Wahrscheinlichkeit ein Hindernis/Merkmal an einer vorbestimmten Position vorhanden ist. Im Beispiel der Fig. 1 sind die Wände 11, 12 sehr statisch vorhanden, und den sie repräsentierenden Kacheln entsprechend den einzelnen Punkten der Fig. 1 können hohe Belegwahrscheinlichkeiten zugeordnet werden, etwa 0,99 oder 1 in stochastischer Notierung. Demgegenüber sind Paletten 19 oder Container 15 variabel, und es ist nicht davon auszugehen, dass sie sicher immer vorhanden sind. Dementsprechend können zugehörige Kacheln mit einer geringeren Belegwahrscheinlichkeit entsprechend einer empirisch ermittelten oder erwarteten Wahrscheinlichkeit annotiert sein, beispielsweise 0,2. Auch erkannte Fahrzeuge können in einer Karte mit geringer Belegwahrscheinlichkeit notiert sein.
- Einen Zuverlässigkeitswert für die Erfassung von Merkmalen. Es kann Merkmale geben, die, obwohl fest vorhanden, schwer zu erfassen sind, etwa filigrane Strukturen, die durch das Raster der räumlichen Auflösung fallen können, oder transparente/semitransparente Strukturen, wie Flächen, Glastüren, spiegelnde Strukturen, die nicht zur Erfassungsgerätschaft zurückstreuen oder ähnliches. Demgegenüber gibt es gut erfassbare Strukturen, wie etwa Wände oder allgemein regulär rückstreuende Objekte wie Container, Paletten, Fahrzeuge oder ähnliches. Deshalb kann erkannten Strukturen ein Zuverlässigkeitswert zugeordnet werden, der die Zuverlässigkeit der Erfassung der jeweiligen Objekte kennzeichnet. Der Zuverlässigkeitswert kann insbesondere angeben, mit welcher Zuverlässigkeit ein jeweiliges Merkmal an einem Ort tatsächlich vorhanden ist. Hierzu können beispielsweise mehrere, insbesondere direkt nacheinander und/oder innerhalb einer vorbestimmten Zeitdauer erfolgte Vermessungen der Umgebung herangezogen werden. Liefern alle oder fast alle Vermessungen das gleiche Ergebnis, ist die Zuverlässigkeit sehr hoch (d.h. 1 oder nahe bei 1). Erkennen z.B. nur 50% der Vermessungen ein Hindernis/Merkmal, so kann die Zuverlässigkeit geringer sein, z.B. nur 0,5. Wird in noch weniger Vermessungen das gleiche Ergebnis erzielt, d.h. es wird z.B. nur in 10% der Messungen ein Hindernis/Merkmal erkannt, kann die Zuverlässigkeit beispielsweise nur 0,1 sein. Zur Ermittlung der Zuverlässigkeit kann insbesondere auch ein Pegel eines Messsignals herangezogen werden. Dieser Pegel kann, z.B. bei einem Laserscanner, für transparente Merkmale niedriger sein, was mit einer geringeren Zuverlässigkeit einhergeht. Der Unterschied zwischen der Vorhandenseinswahrscheinlichkeit und der Zuverlässigkeit liegt also insbesondere darin, dass die Vorhandenseinswahrscheinlichkeit sich auf die Wahrscheinlichkeit bezieht, mit welcher ein real vorhandenes Merkmal tatsächlich vorhanden ist, wohingegen die Zuverlässigkeit sich insbesondere auf die Zuverlässigkeit der Erfassung/Vermessung bezieht (d.h. der z.B. zur Vermessung verwendete Scanner wird bei der Zuverlässigkeit berücksichtigt). Der Zuverlässigkeitswert kann auch die Dynamik/zeitliche Veränderung der Belegwahrscheinlichkeit/Vorhandenseinswahrscheinlichkeit der jeweiligen Kacheln reflektieren.
- Eine semantische Bezeichnung von Strukturen, die für weitergehende Auswertungen herangezogen werden kann. Dies können umgangssprachliche Bezeichnungen sein, etwa in Fig. 2 für 38 "Container ISO40", für 39 "Palette Euro" usw., oder es können codierte, nicht unmittelbar verständliche Bezeichnungen sein.
- Optische oder strukturelle Angaben zum Objekt, etwa ermittelte Farbangaben oder Oberflächentexturangaben oder Oberflächenreflexionsvermögen oder ähnliches.

Das Suchen von passenden bekannten bzw. vollständigen Objektrepräsentationen zu gefundenen unvollständigen Objektrepräsentationen kann auch nach Maßgabe von Metaangaben erfolgen, die zur unvollständigen Objektrepräsentation bekannt sind, etwa einer zugehörigen Farbangabe oder Oberflächentexturangabe oder Oberflächenreflexionsvermögen, die aus der Umgebungsvermessung bekannt sein können.

Wenn eine unvollständige Objektrepräsentation ergänzt oder ersetzt wird, um sie, wie beschrieben, zu vervollständigen, können dabei auch Metainformationen mit in die Umgebungsrepräsentation eingetragen werden, die der aufgefundenen bekannten bzw. vollständigen Objektrepräsentation (entweder in der schon gegebenen Umgebungsrepräsentation oder in der Liste) schon anhaftete. Fig. 2 zeigt, dass den jeweiligen Objektrepräsentationen 38, ..., 3D jeweils Felder 23, 24 zugeordnet sind. Im Feld 23 sind beispielhaft Vorhandenseinswahrscheinlichkeiten V und Zuverlässigkeitswerte Z gespeichert, die jeweils individuell für die einzelnen Elemente gelten. Wie schon dargestellt können sie stochastisch notiert gewählt sein (also als Faktor zwischen 0 und 1 normiert sein), oder sie können in einem anderen Format festgelegt sein. In Spalte 24 ist es möglich, semantische Notierungen wie oben beschrieben einzutragen, die dann in die zu vervollständigende Umgebungsrepräsentation übernommen werden können. Die Vorhandenseinswahrscheinlichkeiten und Zuverlässigkeitswerte sind individuell für die jeweiligen Objekte, so dass sie individuell als V38, Z38 oder V39, Z39 oder V3A, Z3A ... hinterlegt sind.

Weiterhin ist es möglich, in der Tabelle 20 der Fig. 2 verarbeitete Daten der jeweiligen Objekte zu hinterlegen, die eine einfachere Objekterkennung durch Mustererkennungsalgorithmen ermöglichen.

Im Hinblick auf die mögliche Ausstattung von Objektrepräsentationen in einer Umgebungsrepräsentation mit Metaangaben wie oben beschrieben können auch solche Objektrepräsentationen als unvollständige Objektrepräsentationen angesehen werden, die zwar "geographisch" vollständig ein Objekt beschreiben (etwa durch einen Umriss, der eine vollständig geschlossene Linie zeigt), denen aber die gewünschten Metaangaben wie oben beschrieben nicht oder nicht vollständig zugeordnet sind. Das Vervollständigen kann dann jedenfalls das zugeordnete Eintragen der aus der Tabelle oder aus der schon vorhandenen Umgebungsrepräsentation ermittelten entsprechenden Zuverlässigkeitswerte, Vorhandenseinswahrscheinlichkeitswerte, semantischer Notierungen, und ähnliches umfassen. Daneben kann auch die geographische Repräsentierung des Objekts selbst ersetzt werden, etwa einer real-suboptimalen Repräsentation durch eine ideale, die aus der Tabelle der Fig. 2 gewonnen wurde.

Bezug nehmend auf Fig. 4 wird im Folgenden nochmals ein Verfahren zur Ergänzung einer elektronisch nutzbaren Umgebungsrepräsentation beschrieben. Nach seinem Start 40 wird eine Initialisierung 41 vorgenommen, die das Bereitstellen der nötigen Daten enthalten kann, etwa das Zugänglichmachen einer schon vorhandenen elektronisch nutzbaren Umgebungsrepräsentation und/oder das Zugänglichmachen einer elektronisch nutzbaren Liste bekannter Objekte. Die Initialisierung kann auch das Vermessen der Umgebung enthalten, um neue Vermessungswerte zu gewinnen.

Eine Vermessung kann dabei als ein "Rundumscan" um das Messgerät herum verstanden werden. Das Messgerät kann Teil eines autonom navigierenden Fahrzeugs sein. Der Rundumscan kann zweidimensional sein, indem er im Kreis (oder über einen Kreissektor) um das Fahrzeug herum geführt wird und dort Paare von Winkellagen und Abständen angibt. Der Scan kann auch dreidimensional sein, indem nicht nur um das Fahrzeug herum gescannt wird, sondern auch über das Fahrzeug hinweg (und bei Fluggeräten ggf. auch darunter).

Statt eines Fahrzeugs kann die Vermessungsvorrichtung auch von einem anderen autonom navigierenden Objekt getragen werden, etwa einem Roboterarm. Beim dreidimensionalen Vermessen kann die Sphäre mit zwei Winkelparametern (entsprechend Länge und Breite) beschrieben werden. Es ergeben sich dazu jeweils gemessene Entfernungen. Solche Vermessungen können einmal oder mehrfach aus einer Perspektive oder aus mehreren aufeinanderfolgenden unterschiedlichen Perspektiven erfolgen, wobei die unterschiedlichen Perspektiven sich zwanglos bei der Fahrt eines Fahrzeugs ergeben können.

Im Schritt 42 wird nach unvollständigen Objektrepräsentationen gesucht. Hier kann in frischen Vermessungsdaten wie eben beschrieben gesucht werden oder in der schon vorhandenen Umgebungsrepräsentation. Eine unvollständige Umgebungsrepräsentation kann dabei ein geometrisch bzw. im Grundriss unvollständig repräsentiertes Objekt sein, wie zu den Bezugsziffern 13, 14 und 15 in Fig. 1 gezeigt, und/oder es kann ein repräsentiertes Objekt sein, zu dem Metadaten nicht oder nicht vollständig repräsentiert sind.

Das Suchen nach unvollständigen Repräsentationen kann das Erkennen von Teilansichten eines Objekts umfassen und dann das Überprüfen der Teilansicht dahingehend, ob sie hinreichend unterscheidungskräftig ist, um als unvollständige Objektrepräsentation überprüft zu werden. Gegebenenfalls kann noch überprüft werden, ob die Teilansicht nicht schon Teil einer vollständigen Objektrepräsentation ist.

Das Suchen unvollständiger Objektrepräsentationen im Schritt 42 kann vorzugsweise innerhalb der schon vorhandenen Umgebungsrepräsentation erfolgen. Es kann vorzugsweise dann erfolgen, wenn (d. h. bevor oder nachdem) in der schon vorhandenen Umgebungsrepräsentation aus anderen Abläufen heraus Aktualisierungen vorgenommen wurden. Diese Aktualisierungen können dazu führen, dass unvollständige Repräsentationen entstehen, die gegebenenfalls vervollständigt werden können. (Das Verfahren beginnt mit unvollständigen Objektrepräsentationen 13 und vervollständigt diese hin zu Objektrepräsentationen 31). Bei der Suche nach unvollständigen Objektrepräsentationen unmittelbar vor oder nach der Aktualisierung der Umgebungsrepräsentation entsteht der Vorteil, dass nur in der Nähe der aktualisierten Stelle gesucht werden muss und dass nicht die gesamte Umgebungsrepräsentation durchsucht werden muss.

Wenn eine unvollständige Objektrepräsentation im Schritt 42 gefunden wurde, kann im Schritt 43 ein dazu passendes vollständig repräsentiertes Objekt gesucht werden. Diese Suche kann innerhalb der existierenden Umgebungsrepräsentation erfolgen oder innerhalb einer separat vorgesehenen Liste. Es können hier geeignete Musterabgleichabgleichalgorithmen bzw. Mustererkennungsalgorithmen verwendet werden. Sie können zweidimensionale oder dreidimensionale Strukturbeschreibungen verwenden. Sie können auch semantisch Metadaten oder verarbeitete Daten von Objektbeschreibungen verwenden, die für die Objekterkennung oder Mustererkennung optimiert sind.

Im Schritt 44 wird überprüft, ob sich ein Treffer ergeben hat. Hier können Bewertungen mit erzeugt werden (etwa in statistischer Formatierung), die ein Maß der Sicherheit oder Unsicherheit des gefundenen Treffers mit nennen.

Im Schritt 45 wird eine Aktualisierung der Umgebungsrepräsentation vorgenommen. Diese Aktualisierung kann das Ergänzen vorhandener Grundriss-Repräsentationen von Objekten umfassen oder das vollständige Ersetzen derselben. Die Aktualisierung kann auch das Eintragen von Metadaten (Vorhandenseinswahrscheinlichkeit, Zuverlässigkeit, semantische Notierung und ähnliches) umfassen. Die Zuverlässigkeitsnotierung kann auch nach Maßgabe der im Schritt 44 ermittelten Treffersicherheit erfolgen.

Im Schritt 46 ist das Ende des Verfahrens angezeigt. Es kann aber auch iterativ bzw. autonom periodisch durchgeführt werden. Es kann so wiederholt werden, dass über mehrere oder viele Durchläufe eine vorhandene Umgebungsrepräsentation vollständig überprüft wird.

Gegenstand der Erfindung ist auch eine Vorrichtung zur Durchführung des Verfahrens. Die Vorrichtung hat Einrichtungen zur Implementierung der jeweiligen Verfahrensschritte.

Die Vorrichtung zur Durchführung des beschriebenen Verfahrens kann mittels eines Rechners oder mittels mehrerer miteinander kommunizierender Rechner implementiert sein. Die Rechnerkommunikation kann (zeitweise) leitungsgebunden sein, etwa an einer "docking Station", oder sie kann drahtlos sein. Drahtlose Kommunikation kann WLAN/WiFi, Bluetooth oder andere Kommunikationsstandards involvieren.

Bei mehreren Rechnern kann eine peer-to-peer-Struktur vorliegen, also das Zusammenarbeiten mehrerer gleichartiger Rechner, etwa Rechner mehrerer autonom navigierender Fahrzeuge, oder es kann eine Client-Server-Struktur implementiert sein, bei der beispielsweise die autonom navigierenden Fahrzeuge Clients sind, die mit einem Server kommunizieren. Der Server kann dann weitgehende datenverarbeitende Funktionen im Sinne der Erfindung implementieren und die Clients (autonom fahrende Fahrzeuge) dienen primär der Datenerhebung (Umgebungsscan) und Kommunikation. Es können diese Funktionen aber auch clientseitig implementiert sein, und der Server hat demgegenüber synchronisierende und abstimmende Funktionen unter den verschiedenen Clients.

Gegenstand der Erfindung ist weiterhin ein Datenträger mit Programmcode darauf, der, wenn ausgeführt, ein Verfahren wie weiter oben beschrieben implementiert.

In dieser Beschreibung sollen Merkmale auch dann als miteinander kombinierbar angesehen werden, wenn ihre Kombination nicht explizit beschrieben ist, soweit die Kombination technisch möglich ist. Merkmale, die in gewissen Kontexten, Ausführungsformen oder Patentansprüche beschrieben sind, sollen auch losgelöst von diesen Kontexten, Ausführungsformen oder Patentansprüchen verstanden werden und in anderen Kontexten, Ausführungsformen und Patentansprüchen verwendbar sein. Beschreibungen von Verfahren und Verfahrensschritten sollen auch als Beschreibungen von Vorrichtungen oder Vorrichtungsteilen verstanden werden, die die jeweiligen Verfahren bzw. Verfahrensschritte implementieren, und umgekehrt.

### Bezugszeichenliste

- 10: Umgebungsrepräsentation
- 11, 12: Wände
- 13: unvollständiges Muster (Palette)
- 14: runder Gegenstand
- 15: unvollständiges Muster (Container)
- 16: kleine Struktur
- 17: Fahrzeug
- 17': neue Position
- 18: Pfad
- 19: vollständiges Muster (Palette)
- 20: Liste
- 21: Index
- 22: vollständige Repräsentation
- 23: Metaangaben (Zuverlässigkeit)
- 24: vorverarbeitete Daten
- 31, 32: vervollständigte Daten
- 40: Start
- 41: Initialisierung
- 42: Erkennung einer unvollständigen Repräsentation
- 43: Suche einer vollständigen Repräsentation
- 44: Trefferüberprüfung
- 45: Eintrag
- 46: Ende

## Patentansprüche

1. Verfahren zum Ergänzen einer elektronisch nutzbaren Repräsentation (10) einer Umgebung, mit den Schritten
a. Bereitstellen einer elektronisch nutzbaren Umgebungsrepräsentation (10),
b. einmaliges oder mehrmaliges Vermessen einer Umgebung und Extrahieren einer unvollständigen Objektrepräsentation (13, 15) aus dem oder den Vermessungsergebnissen, und/oder Überprüfen von Einträgen in der Umgebungsrepräsentation (10) und Extrahieren einer unvollständigen Objektrepräsentation (13, 15) aus der Umgebungsrepräsentation (10),
c. Prüfen, ob die unvollständige Objektrepräsentation einem Bereich eines andernorts in der Umgebungsrepräsentation (10) repräsentierten ersten Objekts (19) hinreichend ähnelt, und
d. wenn ja, Eintragen von Daten in die Umgebungsrepräsentation (10) an der Stelle der unvollständigen Objektrepräsentation nach Maßgabe der Einträge in der Umgebungsrepräsentation (10) zum ersten Objekt.

2. Verfahren zum Ergänzen einer elektronisch nutzbaren Repräsentation (10) einer Umgebung, mit den Schritten
a. Bereitstellen einer elektronisch nutzbaren Umgebungsrepräsentation (10) und einer elektronisch nutzbaren Liste (20) bekannter Objekte, wobei die Liste (20) zu jedem Objekt Informationen hält, die einen repräsentativen Eintrag von das Objekt repräsentierenden Daten in der Umgebungsrepräsentation (10) ermöglichen,
b. einmaliges oder mehrmaliges Vermessen einer Umgebung und Extrahieren einer unvollständigen Objektrepräsentation aus dem oder den Vermessungsergebnissen, und/oder Überprüfen von Einträgen in der Umgebungsrepräsentation (10) und Extrahieren einer unvollständigen Objektrepräsentation aus der Umgebungsrepräsentation (10),
c. Prüfen, ob die unvollständige Objektrepräsentation als ein Bereich eines in der Liste (20) enthaltenen Objekts qualifiziert, und
d. wenn ja, Eintragen von das in der Liste (20) enthaltene Objekt beschreibenden Daten in die Umgebungsrepräsentation (10) nach Maßgabe des Objekteintrags in der Liste (20).

3. Verfahren nach Anspruch 1 oder 2, bei dem der Schritt b folgende Schritte aufweist:
b1. Erkennen in dem oder den Vermessungsergebnissen oder in der Umgebungsrepräsentation (10) einer Teilansicht eines Objekts,
b2. Überprüfen in der vorliegenden Umgebungsrepräsentation (10), ob die erkannte Teilansicht Teil einer in der Umgebungsrepräsentation (10) eingetragenen vollständigen Objektrepräsentation ist, und
b3. wenn nicht, Extrahieren der erkannten Teilansicht als unvollständige Objektrepräsentation.

4. Verfahren nach Anspruch 3, bei dem im Schritt b2 Daten aus den Vermessungsergebnissen oder der Umgebungsrepräsentation (10) auf hinreichende Unterscheidungskraft überprüft werden und nur beim Vorliegen derselben als Teilansicht eines Objektes gewertet werden.

5. Verfahren nach einem der vorherigen Ansprüche, bei dem im Schritt a. eine Aktualisierung der Umgebungsrepräsentation (10) durch Eintrag eines Merkmals in der Umgebungsrepräsentation (10) erfolgt und nach der Aktualisierung die Überprüfung von Einträgen in der Umgebungsrepräsentation (10) des Schritts b. ausgeführt wird, indem das neue Merkmal und in der Nähe liegende repräsentierte Merkmale daraufhin überprüft werden, ob sie eine unvollständige Objektrepräsentation (13, 15) sind.

6. Verfahren nach Anspruch 2, bei dem der Listeneintrag für ein Objekt eine Gridmap oder eine vektorielle Darstellung des Objekts ist.

7. Verfahren nach einem der vorherigen Ansprüche, bei dem im Schritt c. nach Maßgabe des Prüfungsergebnisses Metaangaben (23) erzeugt werden, nach deren Maßgabe Metaangaben in die Umgebungsrepräsentation (10) eingetragen werden können, wobei die Metaangaben eine oder mehrere der folgenden Angaben aufweisen:
• eine Angabe zur Belegwahrscheinlichkeit eines räumlichen Bereichs der Umgebungsrepräsentation,
• einen Zuverlässigkeitswert für die Zuverlässigkeit der Erfassung eines in der Umgebungsrepräsentation kartierten Merkmals,
• eine semantische Bezeichnung eines in der Umgebungsrepräsentation kartierten Objekts,
• Angaben zu optischen oder strukturellen Eigenschaften eines in der Umgebungsrepräsentation kartierten Objekts.

8. Verfahren nach Anspruch 2, bei dem die Liste (20) Metaangaben zu gelisteten Objekten enthält, nach deren Maßgabe Metaangaben (23) in die Umgebungsrepräsentation (10) eingetragen werden können, wobei die Metaangaben eine oder mehrere der folgenden Angaben aufweisen:
• eine Angabe zur Belegwahrscheinlichkeit eines räumlichen Bereichs der Umgebungsrepräsentation
• einen Zuverlässigkeitswert für die Zuverlässigkeit der Erfassung eines in der Umgebungsrepräsentation kartierten Merkmals,
• eine semantische Bezeichnung einer in der Umgebungsrepräsentation kartierten Objekts,
• Angaben zu optischen oder strukturellen Eigenschaften eines in der Umgebungsrepräsentation kartierten Objekts.

9. Verfahren nach Anspruch 2 oder 8, bei dem die Liste (20) zu gelisteten Objekten verarbeitete Daten enthält, die bei der Objekterkennung herangezogen werden.

10. Verfahren nach Anspruch 3 in Rückbezug auf Anspruch 2, bei dem
a. der Listeneintrag eines Objekts eine orientierte Objektbeschreibung aufweist,
b. der extrahierten Teilansicht eine Orientierung zugeordnet wird und
c. der Eintrag von Objektdaten in der Umgebungsrepräsentation (10) nach Maßgabe der zugeordneten Orientierung erfolgt.

11. Verfahren nach Anspruch 2 oder 8 bis 10, bei dem die Objekteinträge in der Liste (20) ein Objekt dreidimensional beschreiben und im Schritt b die Umgebung flächig vermessen wird.

12. Verfahren nach einem der vorherigen Ansprüche, bei dem die unvollständige Objektrepräsentation (13, 15) ergänzt oder durch eine bekannte, vorzugsweise vollständige Objektrepräsentation (19) ersetzt wird.

13. Verfahren nach einem der vorherigen Ansprüche, bei dem im Schritt c. das Prüfen auf hinreichende Ähnlichkeit Bezug nehmend auf geometrische Informationen der verglichenen Objekte wie Form und Größe und/oder nach Maßgabe von bekannten vergleichbaren Metaangaben erfolgt, die zur unvollständigen Objektrepräsentation bekannt sind, insbesondere Farbangaben und/oder Oberflächentexturangabe und/oder Oberflächenreflexionsvermögen.

14. Vorrichtung zum Ergänzen einer elektronisch nutzbaren Repräsentation (10) einer Umgebung, mit
a. einer Einrichtung zum Bereitstellen einer elektronisch nutzbaren Umgebungsrepräsentation (10),
b. einer Einrichtung zum einmaligen oder mehrmaligen Vermessen einer Umgebung und Extrahieren einer unvollständigen Objektrepräsentation (13, 15) aus dem oder den Vermessungsergebnissen, und/oder einer Einrichtung zum Überprüfen von Einträgen in der Umgebungsrepräsentation (10) und Extrahieren einer unvollständigen Objektrepräsentation aus der Umgebungsrepräsentation (10),
c. einer Einrichtung zum Prüfen, ob die unvollständige Objektrepräsentation (13, 15) einem Bereich eines in der Umgebungsrepräsentation (10) andernorts repräsentierten ersten Objekts (19) hinreichend ähnelt, und
d. einer Einrichtung, die bei hinreichender Ähnlichkeit das Eintragen von Daten in die Umgebungsrepräsentation (10) an der Stelle der unvollständigen Objektrepräsentation nach Maßgabe der Einträge in der Umgebungsrepräsentation (10) zum ersten Objekt vornimmt.

15. Vorrichtung zum Ergänzen einer elektronisch nutzbaren Repräsentation (10) einer Umgebung, mit
a. einer Einrichtung zum Bereitstellen einer elektronisch nutzbaren Umgebungsrepräsentation (10) und einer elektronisch nutzbaren Liste (20) bekannter Objekte, wobei die Liste (20) zu jedem Objekt Informationen hält, die einen repräsentativen Eintrag von das Objekt repräsentierenden Daten in der elektronisch nutzbaren Umgebungsrepräsentation (10) ermöglichen,
b. einer Einrichtung zum einmaligen oder mehrmaligen Vermessen einer Umgebung und Extrahieren einer unvollständigen Objektrepräsentation aus dem oder den Vermessungsergebnissen, und/oder einer Einrichtung zum Überprüfen von Einträgen in der Umgebungsrepräsentation (10) und Extrahieren einer unvollständigen Objektrepräsentation (13, 15) aus der Umgebungsrepräsentation (10),
c. einer Einrichtung zum Prüfen, ob die unvollständige Objektrepräsentation als ein Bereich eines in der Liste (20) enthaltenen Objekts qualifiziert, und
d. einer Einrichtung zum Eintragen von das in der Liste (20) enthaltene Objekt beschreibenden Daten in die Umgebungsrepräsentation (10) nach Maßgabe des Objekteintrags in der Liste (20).

## Claims

1. A method of supplementing an electronically usable representation (10) of an environment, comprising the steps
a. providing an electronically usable environmental representation (10);
b. measuring an environment once or a multiple of times and extracting an incomplete object representation (13, 15) from the measurement result or results and/or checking entries in the environmental representation (10) and extracting an incomplete object representation (13, 15) from the environmental representation (10);
c. checking whether the incomplete object representation is sufficiently similar to a region of a first object (19) represented elsewhere in the environmental representation (10); and
d. if so, entering data into the environmental representation (10) at the position of the incomplete object representation in accordance with the entries in the environmental representation (10) with respect to the first object.

2. A method of supplementing an electronically usable representation (10) of an environment, comprising the steps
a. providing an electronically usable environmental representation (10) and an electronically usable list (20) of known objects, wherein the list (20) holds pieces of information on each object which enable a representative entry of data representing the object in the environmental representation (10);
b. measuring an environment once or a multiple of times and extracting an incomplete object representation from the measurement result or results and/or checking entries in the environmental representation (10) and extracting an incomplete object representation from the environmental representation (10);
c. checking whether the incomplete object representation qualifies as a region of an object included in the list (20); and
d. if so, entering data describing the object included in the list (20) into the environmental representation (10) in accordance with the object entry in the list (20).

3. A method in accordance with claim 1 or claim 2, in which the step b comprises the following steps:
b1. recognizing a part view of an object in the measurement results or results or in the environmental representation (10);
b2. checking in the present environmental representation (10) whether the recognized part view is part of a complete object representation entered in the environmental representation (10); and
b3. if not, extracting the recognized part view as an incomplete object representation.

4. A method in accordance with claim 3, in which, in the step b2, data from the measurement results or from the environmental representation (10) are checked for a sufficient distinctiveness and are only assessed as a part view of an object if a sufficient distinctiveness is present.

5. A method in accordance with any one of the preceding claims, in which,
in the step a., an update of the environmental representation (10) takes place by entering a feature in the environmental representation (10) and,
after the update, the check of entries in the environmental representation (10) of the step b. is performed by checking the new feature and represented features disposed in the vicinity as to whether they are an incomplete object representation (13, 15).

6. A method in accordance with claim 2, in which the list entry for an object is a grid map or a vectorial representation of the object.

7. A method in accordance with any one of the preceding claims, in which, in the step c., in accordance with the test result, meta-information (23) is produced in accordance with which meta-data can be entered into the environmental representation (10), wherein the meta-information comprises one or more of the following pieces of information:
• a piece of information on the occupancy probability of a spatial region of the environmental representation;
• a reliability value for the reliability of the detection of a feature mapped in the environmental representation;
• a semantic designation of an object mapped in the environmental representation; and
• information on optical or structural properties of an object mapped in the environmental representation.

8. A method in accordance with claim 2, in which the list (20) includes meta-information on listed objects in accordance with which meta-information (23) can be entered into the environmental representation (10), wherein the meta-information comprises one or more of the following pieces of information:
• information on the occupancy probability of a spatial region of the environmental representation;
• a reliability value for the reliability of the detection of a feature mapped in the environmental representation;
• a semantic designation of an object mapped in the environmental representation; and
• pieces of information on optical or structural properties of an object mapped in the environmental representation.

9. A method in accordance with claim 2 or claim 8, in which the list (20) includes processed data on listed objects, said data being used in the object recognition.

10. A method in accordance with claim 3, in dependence on claim 2, in which
a. the list entry of an object has an oriented object description;
b. an orientation is associated with the extracted part view; and
c. the entry of object data in the environmental representation (10) takes place in accordance with the associated orientation.

11. A method in accordance with claim 2 or claims 8 to 10, in which the object entries in the list (20) describe an object in a three-dimensional manner and the environment is measured areally in the step b.

12. A method in accordance with any one of the preceding claims, in which the incomplete object representation (13, 15) is supplemented or is replaced by a known, preferably complete object representation (19).

13. A method in accordance with any one of the preceding claims, in which, in the step c., the check for a sufficient similarity takes place with respect to geometrical information of the compared objects such as the shape and size and/or in accordance with known comparable meta-data which are known with respect to an incomplete object representation, in particular color specifications and/or a surface texture specification and/or a surface reflectivity.

14. An apparatus for supplementing an electronically usable representation (10) of an environment, comprising
a. a device for providing an electronically usable environmental representation (10);
b. a device for measuring an environment once or a multiple of times and extracting an incomplete object representation (13, 15) from the measurement result or results and/or a device for checking entries in the environmental representation (10) and extracting an incomplete object representation (13, 15) from the environmental representation (10);
c. a device for checking whether the incomplete object representation (13, 15) is sufficiently similar to a region of a first object (19) represented elsewhere in the environmental representation (10); and
d. a device which, if there is a sufficient similarity, performs the entry of data into the environmental representation (10) at the position of the incomplete object representation in accordance with the entries in the environmental representation (10) with respect to the first object.

15. An apparatus for supplementing an electronically usable representation (10) of an environment, comprising
a. a device for providing an electronically usable environmental representation (10) and an electronically usable list (20) of known objects, wherein the list (20) holds pieces of information on each object which enable a representative entry of data representing the object in the electronically usable environmental representation (10);
b. a device for measuring an environment once or a multiple of times and extracting an incomplete object representation (13, 15) from the measurement result or results and/or a device for checking entries in the environmental representation (10) and extracting an incomplete object representation (13, 15) from the environmental representation (10);
c. a device for checking whether the incomplete object representation qualifies as a region of an object included in the list (20); and
d. a device for entering data describing the object included in the list (20) into the environmental representation (10) in accordance with the object entry in the list (20).

## Revendications

1. Procédé pour compléter une représentation (10), utilisable par voie électronique, d'un environnement, comprenant les étapes consistant à :
a. fournir une représentation (10), utilisable par voie électronique, de l'environnement,
b. mesurer un environnement une ou plusieurs fois et extraire une représentation d'objets incomplète (13, 15) à partir du ou des résultats de mesure, et/ou contrôler les entrées dans la représentation (10) de l'environnement et extraire une représentation d'objets incomplète (13, 15) à partir de la représentation (10) de l'environnement,
c. vérifier si la représentation d'objets incomplète ressemble suffisamment à une zone d'un premier objet (19) représenté ailleurs dans la représentation (10) de l'environnement, et
d. si oui, entrer des données dans la représentation (10) de l'environnement à l'emplacement de la représentation d'objets incomplète en fonction des entrées dans la représentation (10) de l'environnement quant au premier objet.

2. Procédé pour compléter une représentation (10), utilisable par voie électronique, d'un environnement, comprenant les étapes consistant à :
a. fournir une représentation (10), utilisable par voie électronique, de l'environnement et une liste (20), utilisable par voie électronique, d'objets connus, la liste (20) contenant des informations pour chaque objet, qui permettent une entrée représentative des données représentant l'objet dans la représentation (10) de l'environnement,
b. mesurer un environnement une ou plusieurs fois et extraire une représentation d'objets incomplète à partir du ou des résultats de mesure, et/ou contrôler les entrées dans la représentation (10) de l'environnement et extraire une représentation d'objets incomplète à partir de la représentation (10) de l'environnement,
c. vérifier si la représentation d'objets incomplète est qualifiée comme zone d'un objet figurant dans la liste (20), et
d. si oui, entrer des données, décrivant l'objet figurant dans la liste (20), dans la représentation (10) de l'environnement en fonction de l'entrée de l'objet dans la liste (20).

3. Procédé selon la revendication 1 ou 2,
dans lequel l'étape b comprend les étapes suivantes consistant à :
b1. reconnaître dans le ou les résultats de mesure ou dans la représentation (10) de l'environnement une vue partielle d'un objet,
b2. vérifier dans la représentation actuelle (10) de l'environnement si la vue partielle reconnue fait partie d'une représentation d'objets complète entrée dans la représentation (10) de l'environnement, et
b3. sinon, extraire la vue partielle reconnue comme une représentation d'objets incomplète.

4. Procédé selon la revendication 3,
dans lequel
à l'étape b2, les données des résultats de mesure ou de la représentation (10) de l'environnement sont vérifiées quant à leur caractère distinctif suffisant et ne sont évaluées comme une vue partielle d'un objet que si ledit caractère est présent.

5. Procédé selon l'une des revendications précédentes,
dans lequel
à l'étape a., une mise à jour de la représentation (10) de l'environnement est effectuée en entrant une caractéristique dans la représentation (10) de l'environnement et après la mise à jour, la vérification des entrées dans la représentation (10) de l'environnement de l'étape b. est effectuée en vérifiant la nouvelle caractéristique et les caractéristiques représentées situées à proximité pour savoir si elles constituent une représentation d'objets incomplète (13, 15).

6. Procédé selon la revendication 2,
dans lequel
l'entrée dans la liste pour un objet est une carte quadrillée ou une représentation vectorielle de l'objet.

7. Procédé selon l'une des revendications précédentes,
dans lequel
à l'étape c., des métadonnées (23) sont générées en fonction du résultat de la vérification, selon lesquelles des métadonnées peuvent être entrées dans la représentation (10) de l'environnement, les métadonnées comprenant une ou plusieurs des informations suivantes :
• une information sur la probabilité de l'occupation d'une zone spatiale de la représentation de l'environnement,
• une valeur de fiabilité indiquant la fiabilité de la détection d'une caractéristique cartographiée dans la représentation de l'environnement,
• une désignation sémantique d'un objet cartographié dans la représentation de l'environnement,
• des informations sur les propriétés optiques ou structurelles d'un objet cartographié dans la représentation de l'environnement.

8. Procédé selon la revendication 2,
dans lequel
la liste (20) contient des métadonnées sur les objets figurant dans la liste, en fonction de laquelle les métadonnées (23) peuvent être entrées dans la représentation (10) de l'environnement, les métadonnées comprenant une ou plusieurs des informations suivantes :
• une information sur la probabilité de l'occupation d'une zone spatiale de la représentation de l'environnement,
• une valeur de fiabilité indiquant la fiabilité de la détection d'une caractéristique cartographiée dans la représentation de l'environnement,
• une désignation sémantique d'un objet cartographié dans la représentation de l'environnement,
• des informations sur les propriétés optiques ou structurelles d'un objet cartographié dans la représentation de l'environnement.

9. Procédé selon la revendication 2 ou 8,
dans lequel
la liste (20) contient des données traitées sur les objets figurant dans la liste, qui sont utilisées pour la reconnaissance des objets.

10. Procédé selon la revendication 3 prise en dépendance de la revendication 2,
dans lequel
a. l'entrée d'un objet dans la liste présente une description orientée de l'objet,
b. une orientation est attribuée à la vue partielle extraite, et
c. l'entrée des données d'objets dans la représentation (10) de l'environnement est effectuée en fonction de l'orientation attribuée.

11. Procédé selon la revendication 2 ou 8 à 10,
dans lequel
les entrées d'objets dans la liste (20) décrivent un objet en trois dimensions et dans l'étape b, l'environnement est mesuré de façon surfacique.

12. Procédé selon l'une des revendications précédentes,
dans lequel
la représentation d'objets incomplète (13, 15) est complétée ou remplacée par une représentation d'objets (19) connue, de préférence complète.

13. Procédé selon l'une des revendications précédentes,
dans lequel
à l'étape c., la vérification d'une ressemblance suffisante est effectuée en référence aux informations géométriques des objets comparés, telles que la forme et la taille, et/ou en fonction de métadonnées comparables connues qui sont connues quant à la représentation d'objets incomplète, en particulier des informations sur les couleurs et/ou une information sur la texture de surface et/ou sur la réflectivité de surface.

14. Dispositif pour compléter une représentation (10), utilisable par voie électronique, d'un environnement, comportant
a. un moyen pour fournir une représentation (10), utilisable par voie électronique, de l'environnement,
b. un moyen pour mesurer un environnement une ou plusieurs fois et pour extraire une représentation d'objets incomplète (13, 15) à partir du ou des résultats de mesure, et/ou un moyen pour contrôler les entrées dans la représentation (10) de l'environnement et pour extraire une représentation d'objets incomplète à partir de la représentation (10) de l'environnement,
c. un moyen pour vérifier si la représentation d'objets incomplète (13, 15) ressemble suffisamment à une zone d'un premier objet (19) représenté ailleurs dans la représentation (10) de l'environnement, et
d. un moyen qui, en présence d'une ressemblance suffisante, effectue l'entrée de données dans la représentation (10) de l'environnement à l'emplacement de la représentation d'objets incomplète en fonction des entrées dans la représentation (10) de l'environnement quant au premier objet.

15. Dispositif pour compléter une représentation (10), utilisable par voie électronique, d'un environnement, comportant
a. un moyen pour fournir une représentation (10), utilisable par voie électronique, de l'environnement et une liste (20), utilisable par voie électronique, d'objets connus, la liste (20) contenant des informations pour chaque objet, qui permettent une entrée représentative des données représentant l'objet dans la représentation (10), utilisable par voie électronique, de l'environnement,
b. un moyen pour mesurer un environnement une ou plusieurs fois et pour extraire une représentation d'objets incomplète à partir du ou des résultats de mesure, et/ou un moyen pour contrôler les entrées dans la représentation (10) de l'environnement et pour extraire une représentation d'objets incomplète (13, 15) à partir de la représentation (10) de l'environnement,
c. un moyen pour vérifier si la représentation d'objets incomplète est qualifiée comme zone d'un objet figurant dans la liste (20), et
d. un moyen pour entrer les données, décrivant l'objet figurant dans la liste (20), dans la représentation (10) de l'environnement en fonction de l'entrée de l'objet dans la liste (20).
